# EUROPEAN PATENT APPLICATION

(11) **EP 3 133 507 A1**
(43) Date of publication of application: **22.02.2017**
(21) Application number: 16162997.7
(22) Date of filing: 30.03.2016
(51) Int. Cl.: G06F 17/30, G06F 21/62

(54) **CONTEXT-BASED DATA CLASSIFICATION**

(30) Priority: 31.03.2015 US 201562140754 P; 18.03.2016 US 201615074103
(71) Applicant: Secude AG, 6005 Luzern (CH)
(72) Inventor: LINDEMANN, Rainer, 6333 Huenenberg See (CH)
(74) Representative: Rentsch Partner AG

(57) **Abstract**

A method of classifying a digital document may include: identifying, by an automated data processor, a request for access to the digital document for a first user; determining user identifying information for the first user; obtaining, by the automated data processor, according to the user identifying information a first user characteristic including organizational affiliation of the first user or a job function of the first user; generating, by the automated data processor, based on the first user characteristic, a digital document classification for the digital document; associating the digital document classification with the digital document, by embedding the document classification in the digital document or logging the document classification in a log identifying the digital document. A user access determination for the digital document may be made according to the associated digital document classification.

## Description

### CROSS-REFERENCE TO RELATED APPLICATIONS

The present non-provisional patent application claims the benefit of priority from U.S. Provisional Patent Application No. 62/140,754, filed March 31, 2015, the entire contents of which are incorporated herein by reference.

### FIELD OF THE DISCLOSURE

The present invention relates to the field of automated digital documents classification and access management based on such classification, and in particular, to context-based classification using user and document characteristics and analysis of the metadata of the environment from which the document originates.

### BACKGROUND OF THE DISCLOSURE

With the emergence of digital technology, documents can be copied without loss of fidelity, and thus a single document can be copied serially and at little or no cost to generate a virtually unlimited number of copies. Further, a digital document may be shared with others virtually instantaneously around the world and at virtually no cost to the sharer.

At the same time, with the emergence of networked technologies, and in particular the Internet, many individuals and companies have come increasingly to rely on vast electronic databases of digital documents and electronic files. For example, SAP is a well-known maker of suites of business and enterprise software known as ERP (Enterprise Resource Planning), a business management software suite that provides powerful tools for a range of business functions.

An organization generally may wish to limit who has access to an electronic document generated by such software and may wish to limit rights that people, including employees, managers and contractors, have to modify, share, update, rename, or copy the document, or the like. Also, it may be desirable to limit automatically the rights of the user to the document, even if the user is given the right to view the document. The sensitivity of a document and other factors will determine which rights any user may be granted. For example, a document that includes information from human resources about various employees or organizations may be more sensitive than a document that includes sales literature about widely known products.

Information rights management technologies that control access to documents and files and other types of content are known. Unauthorized users may be prevented from copying, sharing, viewing or editing a digital document according to the digital rights management status assigned to the document based on a document classification.

Many such document classification schemes rely on automated analysis of the content of the document of the file, or the physical location or destination of the file, for example, as reflected by the file system folder structure. Other approaches prompt a user to input a level of protection to be given to the document or an indication of the sensitivity of the document, and use such user input, alone or in combination with content analysis, to manage rights for the document. See U.S. Patent Nos. 5892900; 6112181; 6850252; 6938021; 7023979; 7092914; 7110983; 7143066; 7181438; 7421155; 7437023; 7467202; 7526812; 7546334; 7593605; 7596269; 7599580; 7599844; 7603321; 7606741; 7627827; 7669051; 7676034; 7702624; 7706611; 7742953; 7774363; 7801896; 7812860; 7813822; 7818215; 7831912; 7894670; 7974714; 8005720; 8019648; 8024317; 8032508; 8060492; 8064700; 8081849; 8141166; 8146156; 8150967; 8176563; 8179563; 8191158; 8200700; 8200775; 8214387; 8261094; 8321437; 8346620; 8347088; 8370362; 8386418; 8396890; 8397068; 8402557; 8418055; 8423565; 8438630; 8442331; 8447066; 8447111; 8447144; 8468244; 8489624; 8505090; 8515816; 8521772; 8528099; 8549278; 8555080; 8566115; 8572758; 8583263; 8619147; 8619287; 8620083; 8620760; 8621349; 8638363; 8645866; 8655939; 8683547; 8713418; 8718042; 8726379; 8768731; 8781228; 8793162; 8799099; 8799303; 8812959; 8831365; 8863297; 8863298; 8863299; 8874504; 8903759; 8909925; 8953886; 8990235; and U.S. Patent Application Publication Nos. 20030046244; 20030069748; 20030069749; 20050132070; 20050138109; 20050138110; 20050210101; 20060023945; 20060026078; 20060026140; 20060029296;20060036462;20060036585;20060041484;20060041538;20060041590; 20060041605;20060041828;20060047639;20060050996;20060053097;20060061806; 20060078207;20060081714;20060087683;20060098899;20060098900;20060104515; 20060119900;20060122983;20060136629;20060218643;20060282784;20060294094; 20070011140;20070033190;20070156677;20070214030;20070279711;20070300142; 20080016103; 20080027940; 20080034228; 20080103805; 20080109240; 20080109242; 20080114790;20080137971;20080141117;20080168135;20080215509;20080222040; 20080294895;20080313172;20090077658;20090106552;20090132365;20090132366; 20090132395;20090178144;20090254572;20090279533;20100010968;20100092095; 20100146269;20100177964;20100177970;20100182631;20100183246;20100185538; 20100250497;20100278453;20100312768;20100318797;20100332583;20110019020; 20110022940;20110025842;20110026838;20110029443;20110029504;20110033080; 20110035289;20110035656;20110035662;20110043652;20110044547;20110046976; 20110072395;20110075228;20110078585;20110085211;20110096174;20110099602; 20110131174;20110145068;20110145102;20110150335;20110153653;20110154507; 20110242617;20110246333;20110295842;20110320477;20120041941;20120072274; 20120151577;20120198559;20120297277;20130041782;20130080785;20130086213; 20130097627;20130124354;20130124549;20130132367;20130201527;20130218829; 20130219176; 20130219456; 20130242185; 20130243324; 20130246128; 20130246901; 20130275849;20130294606;20130297662;20130304761;20130318589;20130332464; 20140047560;20140101540;20140120981;20140143216;20140156044;20140157431; 20140168716;20140169675;20140181898;20140189483;20140189818;20140201126; 20140230011;20140232889;20140236758;20140236978;20140237342;20140237540; 20140245015;20140253977;20140279324;20140294302;20140304836;20150026162; 20150039474; 20150063714; each of which is expressly incorporated herein by reference in its entirety.

One problem is that often a document fails to contain sufficient information for such content analysis. For example, the content may include a list of figures or values, such as a spreadsheet with numeric information, or may have a list of names. Some documents are not amenable to most automated machine reading and text search technologies because they contain images, computer aided design elements, or the like.

Thus, such a system would often leave the entire decision making of classifying the sensitivity of the document to a user who is prompted for input. This presents a large risk of erroneous classification and burdens the user with the need to enter such information when prompted. In addition, the user may not be the best person to make such decisions regarding the sensitivity of the document.

### SUMMARY OF THE DISCLOSURE

Described are a method, a process, a system, a non-transitory computer-readable medium, and means for implementing the method that classifies a digital document. A method of classifying the digital document may include:
identifying, by an automated data processor, a request for access to the digital document for a first user;
determining, by the automated data processor, user identifying information for the first user;
obtaining, by the automated data processor, according to the user identifying information a first user characteristic comprising at least one of an organizational affiliation of the first user and a job function of the first user;
generating, by the automated data processor, based on the first user characteristic, a digital document classification for the digital document;
associating, by the automated data processor, the digital document classification with the digital document, by at least one of: (1) embedding the document classification in the digital document, and (2) logging the document classification in a log identifying the digital document; and
making a user access determination for the digital document according to the associated digital document classification.

Such a method may further include:
obtaining, by the automated data processor, application identifying information for a programming application associated with generation of the digital document; and
obtaining, by the automated data processor, according to the application identifying information, function identifying information for the programming application,
wherein the generating of the classification is performed according to the function identifying information.

In such a method, the obtaining of the function identifying information may further comprises determining a software grouping of the programming application.

Such a method may further include:
obtaining, by the automated data processor, as a document attribute, an identification of an organizational unit associated with creation of the digital document,
wherein the generating of the classification is performed according to the document attribute.

In such a method, the user characteristic may comprises an organizational affiliation of the first user.

In such a method, the user characteristic may comprises a job function of the first user.

In such a method, the user characteristic may comprises an authorization assigned to the first user.

This method may further comprise setting a rights management policy for the digital document according to the document classification.

Such a method may further include managing document access control for the digital document according to the document classification.

Such a method may further include controlling a right to share the digital document with additional users according to the document classification.

Such a method may further include managing data loss prevention for the digital document according to the document classification.

For example, the digital document may be generated using SAP software.

In such a method, the first user may be a user who created the digital document, or the first user may be a user who first edited the digital document at an organization affiliated with a user attempting to access the digital document. Or, the first user may be a user attempting to access the digital document.

Such a method may further comprise based on the classification, taking the step of one of granting and denying access, to the digital document for a user attempting to access the digital document.

Such a method may further comprise:
obtaining, by the automated data processor, according to the user identifying information a second user characteristic for the first user,
wherein the generating of the digital document classification is based on the first user characteristic and on the second user characteristic.

Such a method may further comprise:
assigning, by the automated data processor, a reliability score to at least one of the first user characteristic and the second user characteristic; and
weighting, by the automated data processor, according to the reliability score, the at least one of the first user characteristic and the second user characteristic,
wherein the generating of the digital document classification is based on the weighted at least one of the first user characteristic and the second user characteristic.

In such a method, a default reliability score may be for the first user characteristic is weighted less than a second reliability score that is generated according to specific information obtained for the first user.

This method may further comprise:
determining that a conflict exists between the first user characteristic and the second user characteristic for the first user; and
selecting a selected score of the first user characteristic and the second user characteristic, the selected score being the score that indicates a higher level in an organizational hierarchy,
wherein the generating of the digital document classification is based on the selected score.

In such a method, the first user characteristic may be obtained from a classification database data populated for the classification.

Such a method may further comprise:
obtaining, by the automated data processor, from the first user a user data input indicating sensitivity of the digital document,
wherein the generating of the classification is performed according to the user data input.

As discussed, also described is an automated data processing system for classifying a digital document. Such an automated data processing system may comprise:
a data determiner configured to obtain user identifying information for a first user attempting to access the digital document, and to obtain, according to the user identifying information, a first user characteristic;
a classification generator configured to generate, using the automated data processor, based on the first user characteristic, a digital document classification for the digital document; and
a document manager configured to associate the digital document classification with the digital document, by at least one of: (1) embedding the digital document classification in the digital document, (2) logging the digital document classification in a log identifying the digital document,
wherein a degree of access to the digital document for a user attempting access is determined according to the digital document classification.

Also described is a method of classifying a digital document, the method comprising:
identifying, by an automated data processor, a request for access, by a first process, to the digital document;
obtaining, by the automated data processor, application identifying information for a programming application associated with generation of the digital document;
generating, by the automated data processor, based on the application identifying information, a digital document classification for the digital document;
associating, by the automated data processor, the digital document classification with the digital document, by at least one of: (1) embedding the document classification in the digital document, and (2) logging the document classification in a log identifying the digital document; and
based on the document classification, denying access to the digital document for a user attempting access to the digital document.

In such a method, the first user may be a user who created the document and the user attempting access is a user different from the first user. In such a method, the user attempting access may be the first user.

In the following, a number of exemplary embodiments is defined.
A. A method of classifying a digital document, the method comprising:
   - identifying, by an automated data processor, a request for access to the digital document for a first user;
   - determining, by the automated data processor, user identifying information for the first user;
   - obtaining, by the automated data processor, according to the user identifying information a first user characteristic comprising at least one of an organizational affiliation of the first user and a job function of the first user;
   - generating, by the automated data processor, based on the first user characteristic, a digital document classification for the digital document;
   - associating, by the automated data processor, the digital document classification with the digital document, by at least one of: (1) embedding the document classification in the digital document, and (2) logging the document classification in a log identifying the digital document; and
   - making a user access determination for the digital document according to the associated digital document classification.
B. The method may further comprise obtaining, by the automated data processor, application identifying information for a programming application associated with generation of the digital document; and obtaining, by the automated data processor, according to the application identifying information, function identifying information for the programming application, wherein the generating of the classification is performed according to the function identifying information.
C. In an embodiment, the obtaining of the function identifying information further comprises determining a software grouping of the programming application.
D. In an embodiment, the method further comprises: obtaining, by the automated data processor, as a document attribute, an identification of an organizational unit associated with creation of the digital document, wherein the generating of the classification is performed according to the document attribute.
E. In an embodiment, the user characteristic comprises an organizational affiliation of the first user.
F. In an embodiment, the user characteristic comprises a job function of the first user.
G. In an embodiment, the user characteristic comprises an authorization assigned to the first user.
H. In an embodiment, the method further comprises setting a rights management policy for the digital document according to the document classification.
I. In an embodiment, the method further comprises managing document access control for the digital document according to the document classification.
J. In an embodiment, the method further comprises controlling a right to share the digital document with additional users according to the document classification.
K. In an embodiment, the method further comprises managing data loss prevention for the digital document according to the document classification.
L. In an embodiment, the digital document is generated using SAP software.
M. In an embodiment, the first user is a user who created the digital document.
N. In an embodiment, the first user is a user who first edited the digital document at an organization affiliated with a user attempting to access the digital document.
O. In an embodiment, the first user is a user attempting to access the digital document.
P. In an embodiment, the method further comprises based on the classification, taking the step of one of granting and denying access, to the digital document for a user attempting to access the digital document.
Q. In an embodiment, the method further comprises obtaining, by the automated data processor, according to the user identifying information a second user characteristic for the first user, wherein the generating of the digital document classification is based on the first user characteristic and on the second user characteristic.
R. In an embodiment, the method further comprises assigning, by the automated data processor, a reliability score to at least one of the first user characteristic and the second user characteristic; and weighting, by the automated data processor, according to the reliability score, the at least one of the first user characteristic and the second user characteristic, wherein the generating of the digital document classification is based on the weighted at least one of the first user characteristic and the second user characteristic.
S. In an embodiment, a default reliability score is for the first user characteristic is weighted less than a second reliability score that is generated according to specific information obtained for the first user.
T. In an embodiment, the method further comprises:
   - determining that a conflict exists between the first user characteristic and the second user characteristic for the first user; and
   - selecting a selected score of the first user characteristic and the second user characteristic, the selected score being the score that indicates a higher level in an organizational hierarchy,
   wherein the generating of the digital document classification is based on the selected score.
U. In an embodiment, the first user characteristic is obtained from a classification database data populated for the classification.
V. In an embodiment, the method further comprises: the method further comprises: obtaining, by the automated data processor, from the first user a user data input indicating sensitivity of the digital document, wherein the generating of the classification is performed according to the user data input.
W. An automated data processing system for classifying a digital document, the automated data processing system comprising:
   - a data determiner configured to obtain user identifying information for a first user attempting to access the digital document, and to obtain, according to the user identifying information, a first user characteristic;
   - a classification generator configured to generate, using the automated data processor, based on the first user characteristic, a digital document classification for the digital document; and a document manager configured to associate the digital document classification with the digital document, by at least one of: (1) embedding the digital document classification in the digital document, (2) logging the digital document classification in a log identifying the digital document,
   wherein a degree of access to the digital document for a user attempting access is determined according to the digital document classification.
X. A method of classifying a digital document, the method comprising:
   - identifying, by an automated data processor, a request for access, by a first process, to the digital document;
   - obtaining, by the automated data processor, application identifying information for a programming application associated with generation of the digital document;
   - generating, by the automated data processor, based on the application identifying information, a digital document classification for the digital document;
   - associating, by the automated data processor, the digital document classification with the digital document, by at least one of: (1) embedding the document classification in the digital document, and (2) logging the document classification in a log identifying the digital document; and
   - based on the document classification, denying access to the digital document for a user attempting access to the digital document.
Y. In an embodiment, the first user is a user who created the document and the user attempting access is a user different from the first user.
Z. In an embodiment, the user attempting access is the first user.

### BRIEF DESCRIPTION OF THE DRAWINGS

The Drawings illustrate various aspects of the disclosed invention. Other aspects will be evident from the textual description, or from the combination of aspects illustrated in the figures and the textual description.
Fig. 1 illustrates an example of a classification data structure for which values are determined, according to an aspect of the disclosure.
Fig. 2 illustrates an example of a flowchart that shows the flow of document accessing steps that includes document classification, according to an aspect of the disclosure.
Fig. 3 illustrates an example of a flowchart that includes some major steps of the classification, according to an aspect of the disclosure.
Fig. 4 illustrates an example of a data derivation scheme used for the classification, according to an aspect of the disclosure.
Fig. 5 illustrates an example of a hierarchy of software applications.
Fig. 6 illustrates an example of components of a digital document classifier, according to an aspect of the disclosure.
Fig. 7 illustrates an example of a layout showing a relationship of an end user, a document server, a classification server and other servers, according to an aspect of the disclosure.
Fig. 8 illustrates an example of a user interface allowing a user to manage information rights management policy according to an aspect of the disclosure.
Fig. 9 illustrates an example of a process interaction diagram that includes classification, according to an aspect of the disclosure.

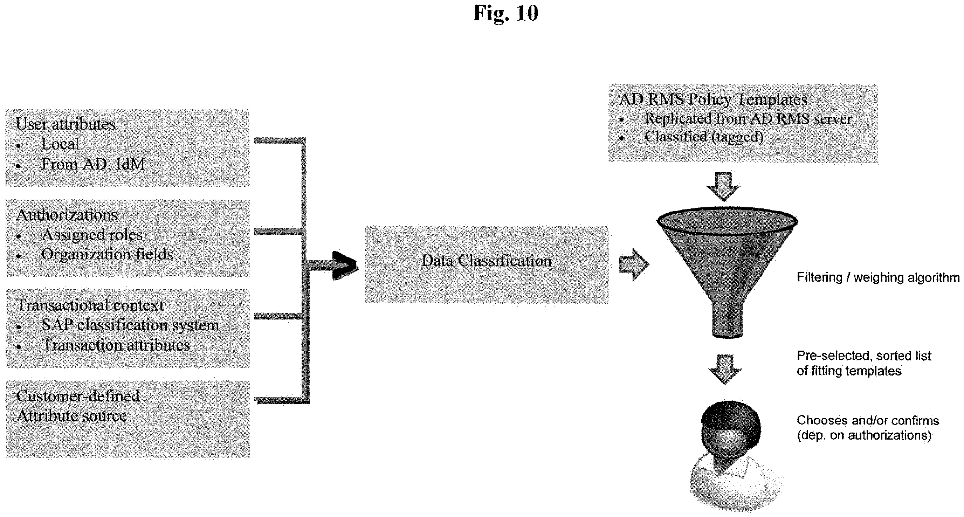

Fig. 10 illustrates an example of a conceptual approach to classification, according to an aspect of the disclosure.

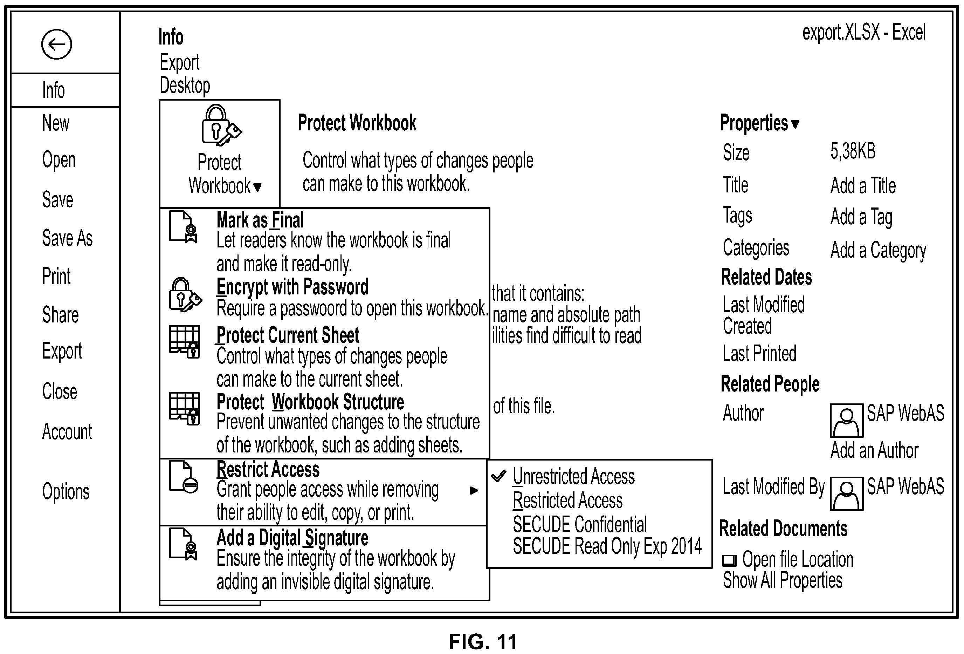

Fig. 11 illustrates an example of a related art user interface used for document rights management, according to an aspect of the disclosure.

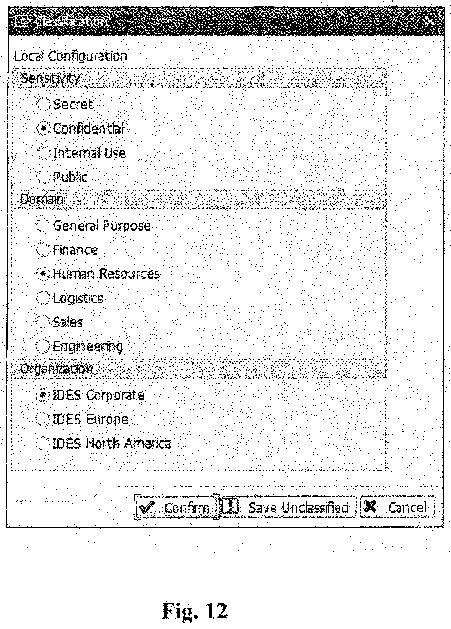

Fig. 12 illustrates an example of an interactive graphical user interface to allow a user to review, to amend or to complete information for classification data determined according to an aspect of the disclosure.
Fig. 13 illustrates examples of some rights management policies generated according to classification data determined.

### DETAILED DESCRIPTION OF THE EMBODIMENTS

Upon detection of a person, such as an employee or organization, attempting to access or to download a digital document, the system can intercept the digital document and can classify the digital document according to context determined for the original document. For example, metadata of the environment from which the document originates or user characteristics of the user attempting to view or to download the digital document may be used to classify the document. According to such document classification generated, the system can then manage access to the digital document, or can use the classification for archiving the document, for example, selective determination of archiving locations, lifetime of the document for which the document is to be saved. The classification generated may be embedded as part of the document and/or entered in a download log for audit purposes. The classification may be used for recognizing and propagating document loss prevention (DLP)-relevant events, so as to trigger appropriate action, for example, for blocking access, and/or to generate an alert, or the like, for setting DLP functions in the network infrastructure (for example, mail systems, routers, and the like), for deriving and applying protection mechanisms, such as information rights management (IRM) or other encryption techniques, and for other such solutions, or for combinations of any two or more of the foregoing.

A context can be defined as a description of aspects of a situation. In this way, context can seem similar to cases in case-based reasoning. A context can have many aspects, typically: geographical; physical; organizational; social; task; action; technological; and time (chronological). One or more such aspects may be related to or based on a user who created the document, or a user who first edited or revised the document for the organization or organizational unit at which access to the digital document is being attempted. For example, the digital document may have been an existing document that was retrieved or rendered and first edited by a user at the organization or organizational unit where the user or attempting to access the digital document is based, and this first editing or rendering of the document within the organization or organizational unit may be of particular interest for the classification. Or, one or more such aspects may be related or based on the user who most recently revised the document, or may be related or based on the user who is attempting now to access the digital document. Therefore, relevant to the information rights management domain, the context generally encompasses predictors of the sensitivity of the content and predictors of the legitimate need and rights of an individual to access the content. These can, in part, be determined by predefined intrinsic or extrinsic rules, based on an analysis of the type of document itself or of the software used to generate it, based on an analysis of characteristics and/or identification the user, or some combinations or subcombinations of these parameters. The context can vary over time, and thus a determination of context-based access rights can change over various attempts at access.

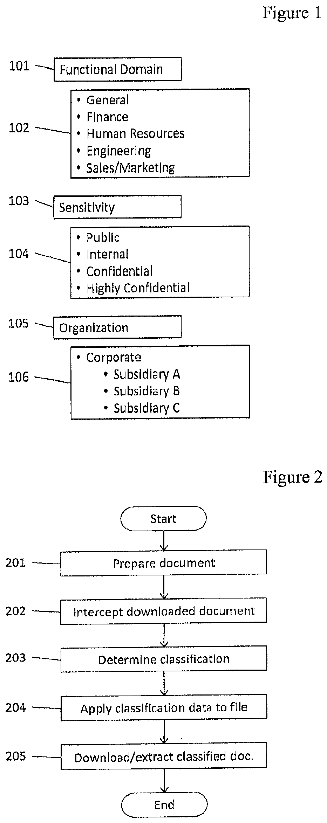

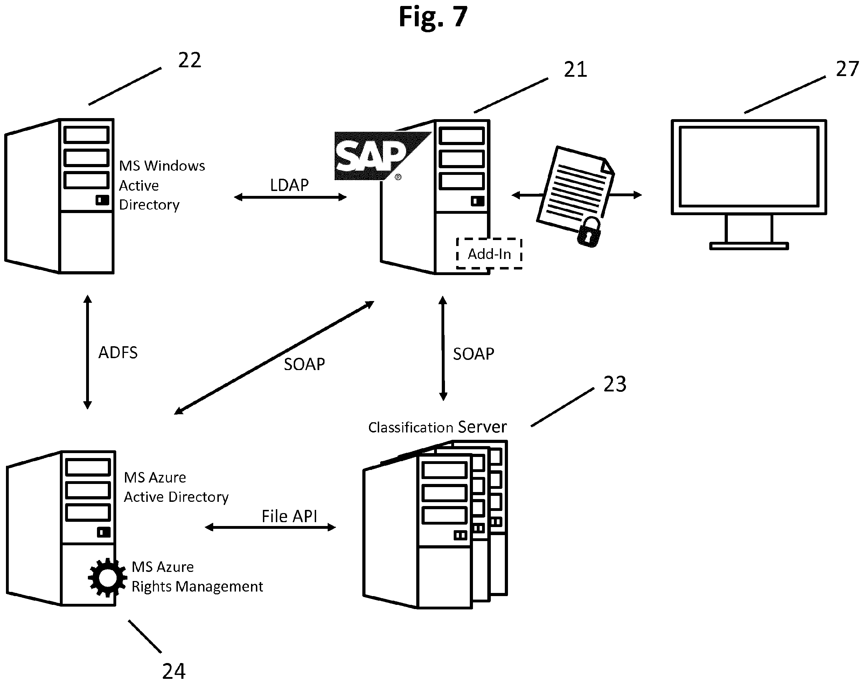

Fig. 2 is a flowchart illustrating the classification process. After system start, a user, such as at front end 27 illustrated in Fig. 7, attempts to access a digital document, such as an SAP business document from SAP server 21. Accessing a document, as described herein, may include an attempt to do one or more of the following: viewing the document on an electronic display or monitor, downloading the document to the front end 27 device of user, printing the document, copying the document, saving the document, deleting the document, renaming the document, moving the document in the filing system or to a different system or device, changing the document, encoding or decoding the document, running the document, playing or replaying the document, compiling the document, displaying the document, transmitting the document, or a combination of the foregoing.

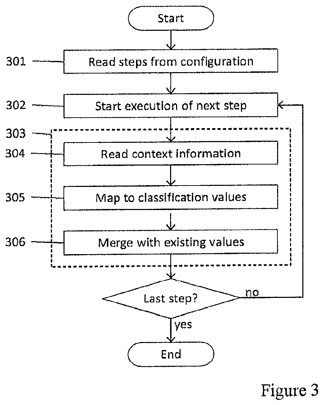

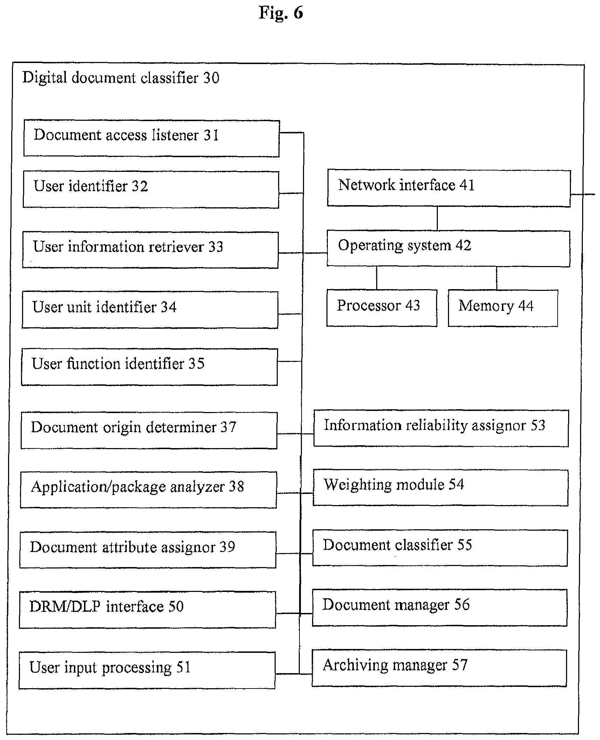

In response to this attempt to access, the document server prepares the document, as illustrated in Step 201 of Fig. 2. At Step 202, and the attempt to access is intercepted by the digital document classifier 30 illustrated in Fig. 6. The classification of the document at Step 203 in Fig. 2 is performed as shown in Fig. 3 in more detail and its accompanying description below. According to classification 203, the classification may be applied to document at Step 204 and the document may be encrypted or otherwise protected to manage access to the document, or the archiving of the document may be automatically managed based on the classification. At Step 205, the document is downloaded or extracted or provided to the user at front end 27 in accordance with the applied classification, and the process ends.

A document, as discussed herein, may include digital or electronic documents, digital or electronic files and other data sets that convey information to a user. Such documents may include word processing or text documents, CAD files, e-mails, spreadsheet data, contacts and/or addresses, calendar entries, intranet web pages, accounting information, lists of names or lists of values, photographs, illustrations, pictures, designs, blueprints, books, video files, audio files, sheet music, software, including source code and/or object code, as well as other types of business or enterprise information and content regardless of the type of media on which they are recorded. Also, while referred to as a "document" herein, one or more electronic or digital files may together be rendered or be provided as a single document. Several examples will be discussed herein with respect to SAP-generated documents and SAP ERP, however it will be understood that any such documents are contemplated.

Managing access to the document may mean limiting or restricting a user to one or more of the following, or a combination thereof: the right to copy, to view, to print, to download, to save, to modify, to delete, to move within or outside the filing system or device, to rename, to encode, to decode, to compile, to run, to compile, to play, to replay, to display, to share, to transmit (e.g., out of a network, out of a device medium, out of a device, out of a set of devices, out of a LAN), to broadcast by the user, or to cause or to facilitate any of the foregoing.

Figure 3 is a flowchart that illustrates a logical flow of the classification derivation. At Step 301, the steps to be executed and their sequence are read from a configuration repository, such as a database or other device or mechanism to persistently store data. These steps are then executed in the order defined by said configuration. Step 303 groups the individual classification steps together as conceptual derivation process.

At Step 304 metadata is obtained for the document. The way in which this occurs depends on the metadata to be read; for example, this may entail a database query, a query to a directory service, a call to a web service, or any other technique permitting the gathering of specific data. Various sources of relevant metadata can be queried for the document, in order to obtain as many aspects of the creating environment of the document. Each metadata source query and interpretation represents one step of this process. The source information that is used to generate the classification may be the user's organizational role or function, the department of the user in the organization, and characteristics of the program, such as the package or suite of software that was used to generate the document being accessed. Sources of metadata for the user may include, for example, one or more of the following: the identity of the user, attributes of the user, such as organizational group or unit information, a directory service (such as Active Directory), an Identity Management application (such as SAP NetWeaver Identity Management) and/or authorizations and roles assigned to the user (e.g. Active Directory group memberships, SAP roles, profiles and activity groups). Additional metadata may include, for example, one or more of the following: the software program or application that produced the data, attributes of this program, including package, application component, and/or other available information, such as transaction code, database tables from which the data originates, SAP Logistics Classification System attributes. Other data sources, such as company-specific databases or repositories that may hold relevant information, may be integrated and used as well. Classification values from one or more properties may also be used to determine or influence the values of other data or values. The user or the user's organization may create a classification database that includes information about a list of users and organizational, functional, location, and other user characteristic information for use by the classification system. Thus, in addition to off-the-shelf applications that provide user information, the customer using the system may create its own metadata database. See, U.S. Patent Nos. 5265221; 5325294; 5347578; 5481613; 5499293; 5528516; 5535383; 5621889; 5748890; 5751909; 5761288; 5797128; 5911143; 5925126; 5949866; 5978475; 5987440; 5991877; 6014666; 6023765; 6029160; 6038563; 6041349; 6041411; 6044401; 6044466; 6052688; 6055637; 6064977; 6073106; 6073234; 6073240; 6073242; 8600895; each of which is expressly incorporated herein by reference in its entirety.

At Step 305, the collected metadata is mapped to classification values. For example, this can occur with the aid of mapping tables held in a database or other device to persistently store data, or with any other mechanism suitable for mapping metadata to classification values (including, for example, scripts, algorithms, calls to external sources such as web services, etc.). The mapping should also express the reliability of the information gathered from the metadata, as further explained below.

At Step 306, the classification information thus gathered is merged with classification information collected by previously executed steps, if any, as further explained below. When all steps have been executed, the classification derivation process is complete.

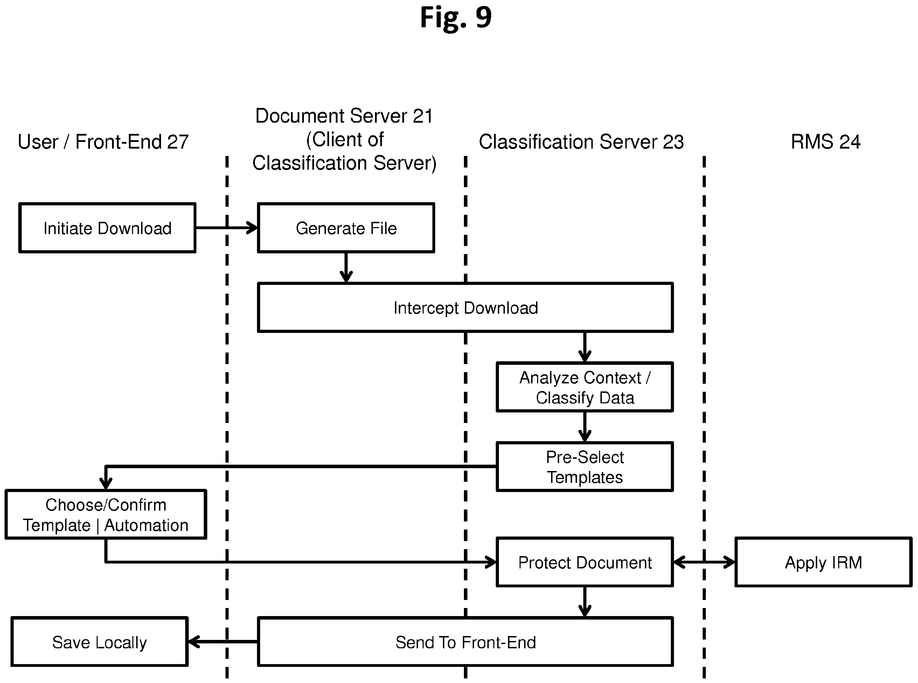

Aspects of a classification method as contemplated herein will now be explained with reference to Figs. 7 and 9.

As shown in Fig. 9, user at front end 27 initiates downloading or other type of accessing of the digital document from document server 21. Document server 21 generates a file as it ordinarily would, responsive to the user request for access. For example, document server 21 may be a SAP server or other type of server that provides a range of business documents to the user at a company. It will be understood that in the context of the present discussion, when the server is discussed, it may be understood as a bank of servers, distributed servers, cloud resources, virtual machine servers, or a data center that includes one or more firewalls, routers, proxy servers, databases and the like. Also, while discussed as two separate devices or groups of devices, document server 21 and classification server 23 may be implemented as a single device or a single group of integrated devices. Servers 21 and 23 may be provided as a single device or group of devices, or their functions may be merged and provided as single server.

After the file is generated responsive to the access request, this process is intercepted. For example, an addin module provided at document server 21 may work in concert with classification server 23 to intercept the attempt to access or to download the document. The addin at document server 21 may then initiate the classification process performed by classification server 23. Classification server 23 analyzes the user context and other metadata for the document, and propose the classification as discussed herein. Additionally, classification server 23 may request a user at front end 27 to confirm the classification or may request other input. Classification server 23 may then protect the document by applying a rights management from rights management server 24. For example, Microsoft's rights management products may be used and accessed using Microsoft Azure's platform. Protected in this way, the document may be sent to front end 27. User may then save or otherwise process the document according to the classification.

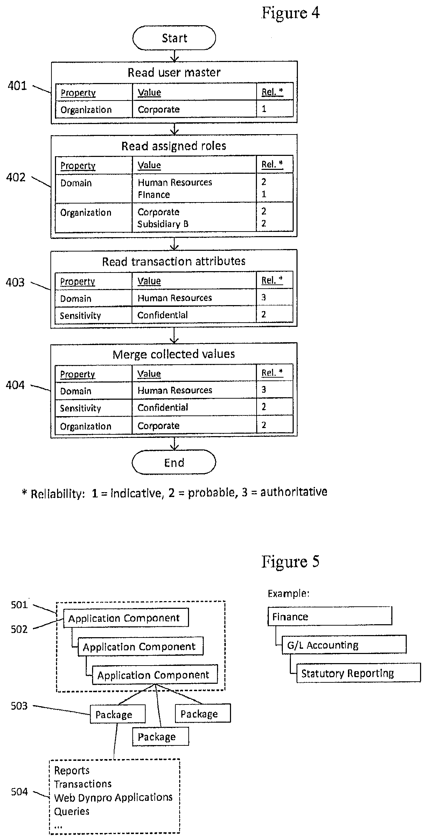

Figure 4 illustrates a derivation and mapping mechanism, using sample data to illustrate aspects of the classification process. At Step 401, attributes from the user master record are obtained from document server 21, from classification server 23 and/or from a connected identity management application. Depending on how the organization is structured, this may yield information of varying reliability. In this example, it is assumed that only an organizational assignment to a corporate function can be derived with a fair degree of certainty. In this example, for the property "organization," the value for the user is corporate. The reliability for this information may be set by default at 1.

More automated ways of determining user information may also be used. For example, a postal code obtained for the office address of the user or other location information may be used to guess at an organization or organizational unit of the user. If the postal code, such as a zip code, for the user is determined to be at a location at which or near which a particular organizational unit such as human resources, is located, then this could be provided as the organizational unit of the user.

At Step 402, the roles, authorizations, directory group memberships and/or similar organizational information for the user, are retrieved. In the example illustrated in Fig. 4, the user has a more general finance role, and a rather specific human resources role; this results in an indicative affiliation with finance and a probable association with human resources. At Step 403, the executed program is analyzed. For example, in SAP, this may be the transaction code or Web Dynpro application and the package or application component to which these belong as explained further in Figure 5. It is determined that the user is executing a report that can produce confidential human resources data (the organizational scope of the selected data may be inaccessible). Another system, external device, a batch job or other process, i.e. a non-human process, may also attempt to access or to download a digital document. In such a case, the executed program and its attributes, for example, report, query and/or queried database table(s), package, application hierarchy, database tables and the like, may be used as context data to generate the document classification. In the case of an SAP document, additional information from what is known as the "BusinessObjects Universe," a logical aggregation of database tables and their relationships, with the purpose of abstracting technical implementation details and related SQL logic from reports accessing this data, may be used. Context data from either the application program used to generate the digital program and/or the process attempting to access or to download the digital document may be used for generating the document classification.

Before continuing with the flowchart of Fig. 4, we now turn to Fig. 1. Figure 1 illustrates an exemplary classification structure or schema for a document for which values are determined according to the present disclosure. Numerals 101, 103 and 105 represent properties of the data, each with a predefined set of possible values, such that 102 enumerates the possible values for property 101, 104 enumerates the possible values for property 103, 106 lists the possible values for property 105). The number of properties, and the number and type of possible values, is not subject to any particular restriction.

Properties and value lists can either be flat, that is a list of alternative values without any particular relationship. Such a list may also be hierarchical, that is having a whole-vs.-part relationship, or incremental, that is having a growing importance or weight.

In the examples of Figure 1, the "Functional Domain" is an example of a flat list, in which all alternative values are of equal importance and significance; "Sensitivity" is an incremental list ("Internal" is more restrictive than "Public", "Confidential" is more restrictive than "Internal", etc.).By way of contrast, the "Organization" is a typical example of a hierarchical value list: "Corporate" is the sum of all subordinate entities, called "Subsidiary A, "Subsidiary B" and "Subsidiary C" in the example. Functionally, this difference is important for two reasons:

If classification is to occur via a user interface, this relationship can guide the user; and

When merging conflicting values from various sources, the hierarchy level can be used as a conflict solver, so that the hierarchically higher value prevails.

An example of this is depicted in Figure 4. At 404 the outcomes of the previous steps are combined. Every source of metadata can be quantified as to its reliability: for example, a general default value may not very reliable, whereas the database table from which the data originates has a much higher degree of reliability or certainty as to the functional domain or sensitivity level of the data. As a result, a value with a higher degree of reliability will override a value with a lesser degree.

If for the same property differing values were collected--in the example of Fig. 4, for the property "domain," "human resources" and "finance" conflicting values were collected, the one with the highest reliability indicator prevails. If a conflict is still to be found (in this case, for property "Organization" the values "Corporate" and "Subsidiary B" were determined with the same reliability), the hierarchically higher value prevails; in this case, this is "Corporate." Such merging of derived values can either occur after each derivation step, or at the end of the process.

If a conflict between values remains, that is two or more values are obtained with equal reliability for the same property, this can be solved in various ways if this is non-hierarchical:

By defining a general default, which will be applied in such cases; or

By showing a user interface to the user, asking him/her to select between the found values (either showing the full value list, or restricted to only the values the system determined).

The classification of a document can be used to derive the corresponding IRM mechanism in various ways. IRM systems typically use policies or templates that define the group of persons who have specific access rights (for example, read, print, edit, copy, send by mail) to documents protected with such policies or templates. Protection may be implemented by encrypting the document and embedding into it the policy with which it needs to comply, so that only authorized users are able to access the document.

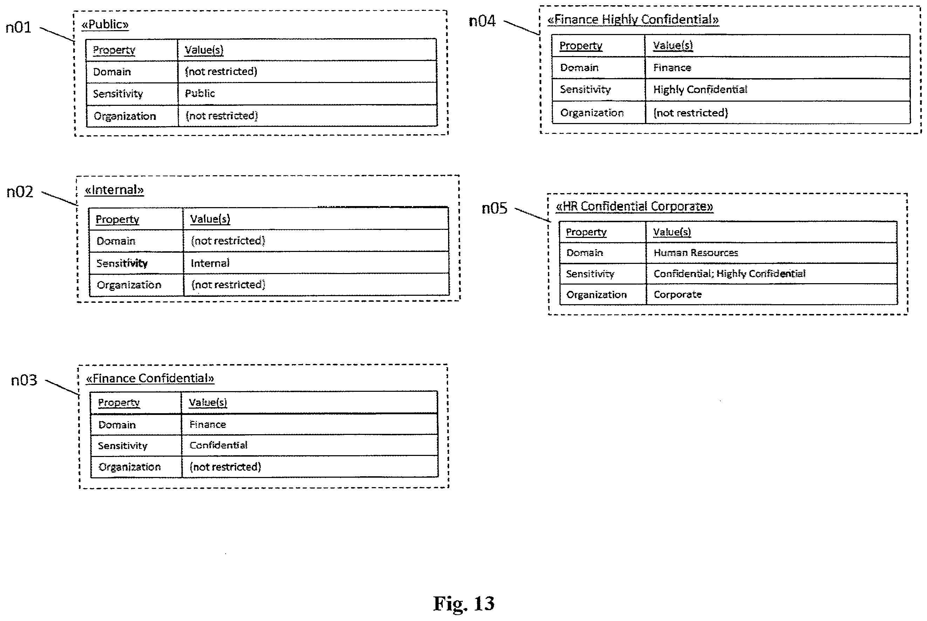

Selection of the IRM policy to be applied to a document can be automated by means of classification. This is achieved by assigning to the IRM policies the classification values for which they are applicable. An example illustrated in Fig.13 shows an implementation.

Documents classified as "Sensitivity = Public", regardless of domain and organization, may be assigned to IRM policy "Public", as shown at n01.

Documents classified as "Sensitivity = Internal", regardless of domain and organization, may be assigned to IRM policy "Internal", as shown at n02.

Documents classified as "Domain = Finance; Sensitivity = Confidential", regardless of the organization they belong to, may be assigned to IRM policy "Finance Confidential", as shown at n03.

Documents classified as "Domain = Finance; Sensitivity = Highly Confidential", regardless of the organization they belong to, will be assigned to IRM policy "Finance Confidential", as shown at n04.

Documents classified as "Domain = Human Resources; Sensitivity = Confidential; Organization = Corporate", or "Domain = Human Resources; Sensitivity = Highly Confidential; Organization = Corporate", may be assigned to IRM policy "HR Confidential Corporate", as shown at n05.

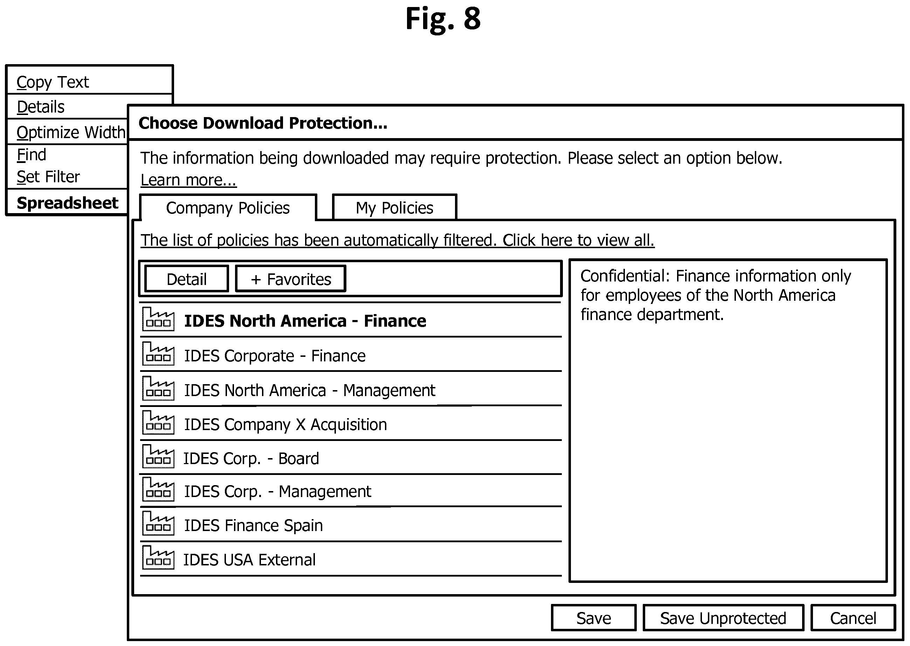

According to an aspect of the disclosure, every possible classification can be mapped to a suitable rights management policy. According to another aspect of the disclosure, if a policy cannot be determined, a dialog can be shown to the user, displaying the best-matching policies that may be applied (as illustrated, for example, in Figure 8. In the alternative, a default or fallback rights management policy may be defined, which can be applied in such cases. As a further alternative, such a download may be blocked.

Based on a document's classification, an archiving system may deduce, for example: whether a document must be or should be or may be archived perennially or permanently or indefinitely, or can be disposed of after a defined period-this may have application, for example, in regulated environments, such as companies subject to government drug or medicine (e.g. FDA) regulations, health, clinical, medical or physician's services sector, military or defense, banking and financial sector; and/or whether a document must be or should be or may be stored in a particularly secured storage location (e.g. to enforce special authentication mechanisms for access to highly critical content).

Figure 5 shows an example of SAP's application hierarchy by way of an example of using programming application information for classification. The hierarchy (501) establishes a logical, hierarchical relationship between the various application components of the overall application. The application components (502) represent a logical grouping of programming objects dedicated to a particular business function. The packages (503) technically group programming objects; every programming object must belong to exactly one package. All programming objects (504) executable by the user (reports, transactions, queries, etc.) therefore may belong to a defined place in the application hierarchy.

Fig. 6 illustrates aspects of the digital document classifier 30 according to an aspect of the present disclosure. Document access listener 31, for example, may be located at document server and may identify an attempt to access a document as discussed herein. User identifier 22 obtains information regarding the identity of the user to be used in classification of the digital document as discussed herein. User information retriever 33 obtains information regarding user characteristics based on user identity. This may include, but not limited to information about the organizational unit of the user and the function or functions performed by the user, user permissions, user's groups, users physical location and other such information, and may also include customer specific user information sources. Document Context Analyzer 37 determines meta data for the document. This may contain, but is not limited to hierarchy and type of origin applications, time of creation, file name, data source tables, data source database, location of file creation, creation server, destination system and others, Context Analyzer may also allow for customer specific data sources. User input processing 51 may prompt the user to enter information about the user, about the document, about the user's organization or organizational unit. Document attribute assignor 39 attaches the user and context information to the document for further processing.

User information retriever 33 obtains information regarding a user characteristic based on user identity. User identifier 34 and user function identifier 35 retrieves or otherwise obtains information about the organizational unit of the user and the function or functions performed by the user. Document origin determiner 37 determines meta data for the document. Application/package analyzer 38 determines a software application or suite of programs associated with the creation of the document. Document assigner 39 assigns a document attribute based on the meta data collected. User input processing 51 may prompt the user to enter information about the user, about the document, about the user's organization or organizational unit and/or may request that the user confirm that the classification for the document.

Information reliability assigner 53 shown in fig. 6 provides a ranking for the reliability or certainty of the information for the user and document obtained, as discussed above. Weighting module 54 then weights the information in accordance with the reliability. Document classifier 55 merges this information and produces a document classification. Document manager 56 to digital rights management/data loss prevention interface 50 manages rights for the document according to the classification generated. For example, this may be done by encoding the document and allowing access according to the classification scheme. Archiving manager 57 stores or moves or shares or copies the document in accordance with archiving scheme according to the document classification. User input processing 51 may prompts the user for acceptance, enhancement or correction of the classification.

According to an aspect of the disclosure, content information obtained from the document may also be used to generate a classification for the document in combination with the context data described herein.

Thus provided is a technical solution to a technical problem. The technical problem is the ease of copying, changing and transmitting a wealth of proprietary information available for a company or organization and the lack of sufficient content that may be available from the document itself for identifying a sensitivity of the document. A technical solution is the use of metadata obtained for the user and/or for the document automatically, the automatic reliability estimation for such information obtained, the automatic merger of such metadata and the automatic classification of the document and management in accordance with the classification.

Described herein is a method, non-transitory computer-readable medium incorporating a program of instructions, means for, device, and system that provides a classification for a digital document and manages access and rights and/or archiving based on the classification. user-selected content driven advertisements. The computer-readable medium may include instruction configured as software, hardware, or firmware, for example, one or more or all of the digital document classifier 30 illustrated in Fig 6, or any component that provides one or more of the functionalities, or any portion of a functionality, described herein. The means for may be any component that provides one or more of the functionalities, or any portion of a functionality, described herein. A device may be a device that includes or executes such software, hardware or firmware. A computer system may include one or more processors in one or more physical units that includes such a device, or that performs such a method, or that executes the computer-readable medium, according to the present disclosure. Further, these computers or processors, including the digital document classifier 30 or components thereof, may be located in a cloud or offsite or may be provided in local enterprise setting or off premises at a third-party contractor site. One or more component of the device generation engine may be provided as software on a processor-readable medium, such as a hard drive, optical disk, memory stick, flash memory, downloadable code stored in random access memory, or the like, may be encoded as hardware, or may be provided as part of a system, such as a server computer.

The digital document classifier 30 may be provided as part of a server, cloud-based resource, desktop, laptop computer, handheld device, tablet, smartphone and the administrator can interact therewith via various types of data processors, including handheld devices, mobile telephones, smart phones, tablets or other types of other communication devices and systems. Various types of memory may be provided in the computer for storing the information, including random access memory, secondary memory, EPROM, PROM (programmable read-only memory), removable storage units, or a combination of the foregoing. In addition, the communication interface between the major components of the system, or between components of the digital document classifier 30, can include a wired or wireless interface communicating over TCP/IP or via other types of protocols, and may communicate via a wired, cable, fiber optics, line, a telephone line, a cellular link, a satellite link, a radio frequency link, such as a Wi-Fi or Bluetooth, LAN, WAN, VPN, the World Wide Web, the Internet, or other such communication channels or networks or a combination of the foregoing.

Some ways of describing aspects of the invention are as follows.
1. A method of classifying a digital document, the method comprising:
   identifying, by an automated data processor, a request for access to the digital document for a first user;
   determining, by the automated data processor, user identifying information for the first user, and obtaining, by the automated data processor, according to the user identifying information a first user characteristic;
   generating, by the automated data processor, based on the first user characteristic, a digital document classification for the digital document; and
   associating, by the automated data processor, the digital document classification with the digital document, by at least one of: (1) embedding the document classification in the digital document, (2) logging the document classification in a log identifying the digital document, and (3) denying access to the digital document for the first user.
2. The method of claim 1, wherein the method further comprises:
   obtaining, by the automated data processor, application identifying information for a programming application associated with generation of the digital document; and
   obtaining, by the automated data processor, according to the application identifying information, function identifying information for the programming application,
   wherein the generating of the classification is performed according to the function identifying information.
3. The method of any combination of the foregoing claims, wherein the obtaining of the function identifying information further comprises determining a software grouping of the programming application.
4.The method of any combination of the foregoing claims, wherein the method further comprises:
   obtaining, by the automated data processor, as a document attribute, an identification of an organizational unit associated with creation of the digital document,
   wherein the generating of the classification is performed according to the document attribute.
5.The method any combination of the foregoing claims, wherein the user characteristic comprises an organizational affiliation of the first user.
6. The method of any combination of the foregoing claims, wherein the user characteristic comprises a job function of the first user.
7.The method of any combination of the foregoing claims, wherein the user characteristic comprises an authorization assigned to the first user.
8. The method of any combination of the foregoing claims, further comprising setting a rights management policy for the digital document according to the document classification.
9. The method of any combination of the foregoing claims, further comprising managing document access control for the digital document according to the document classification.
10. The method of any combination of the foregoing claims, further comprising controlling a right to share the digital document with additional users according to the document classification.
11. The method of any combination of the foregoing claims, further comprising managing data loss prevention for the digital document according to the document classification.
12. The method of any combination of the foregoing claims, wherein the digital document is generated using SAP software.
13. The method of any combination of the foregoing claims, wherein the method further comprises:
   obtaining, by the automated data processor, according to the user identifying information a second user characteristic for the first user,
   wherein the generating of the digital document classification is based on the first user characteristic and on the second user characteristic.
14. The method of any combination of the foregoing claims, wherein the method further comprises:
   assigning, by the automated data processor, a reliability score to at least one of the first user characteristic and the second user characteristic; and
   weighting, by the automated data processor, according to the reliability score, the at least one of the first user characteristic and the second user characteristic,
   wherein the generating of the digital document classification is based on the weighted at least one of the first user characteristic and the second user characteristic.
15. The method of any combination of the foregoing claims, wherein a default reliability score is for the first user characteristic is weighted less than a second reliability score that is generated according to specific information obtained for the first user.
16. The method of any combination of the foregoing claims, wherein the method further comprises:
   determining that a conflict exists between the first user characteristic and the second user characteristic for the first user; and
   selecting a selected score of the first user characteristic and the second user characteristic, the selected score being the score that indicates a higher level in an organizational hierarchy,
   wherein the generating of the digital document classification is based on the selected score.
17. The method of any combination of the foregoing claims, wherein the first user characteristic is obtained from a classification database data populated for the classification.
18. The method of any combination of the foregoing claims, wherein the method further comprises:
   obtaining, by the automated data processor, from the first user a user data input indicating sensitivity of the digital document,
   wherein the generating of the classification is performed according to the user data input.
19. An automated data processing system for classifying a digital document, the automated data processing system comprising:
   a data determiner configured to obtain user identifying information for a first user attempting to access the digital document, and to obtain, according to the user identifying information, a first user characteristic;
   a classification generator configured to generate, using the automated data processor, based on the first user characteristic, a digital document classification for the digital document; and
   a document manager configured to associate the digital document classification with the digital document, by at least one of: (1) embedding the digital document classification in the digital document, (2) logging the digital document classification in a log identifying the digital document, and (3) denying access to the digital document for the first user.
20. A method of classifying a digital document, the method comprising:
   identifying, by an automated data processor, a request for access, by a first process, to the digital document;
   obtaining, by the automated data processor, application identifying information for a programming application associated with generation of the digital document;
   generating, by the automated data processor, based on the application identifying information, a digital document classification for the digital document; and
   associating, by the automated data processor, the digital document classification with the digital document, by at least one of: (1) embedding the document classification in the digital document, (2) logging the document classification in a log identifying the digital document, and (3) denying access to the digital document for the first user.

Although the present invention has been described in relation to particular embodiments thereof, many other variations, combinations and sequences of steps, and modifications and other uses will become apparent to those skilled in the art. Steps outlined in sequence need not necessarily be performed in sequence, not all steps need necessarily be executed and other intervening steps may be inserted. Features described with respect to one embodiment or implementation described herein may be freely used in or combined with other embodiments and implementations. It is preferred, therefore, that the present invention be limited not by the specific disclosure herein.

## Claims

1. A method of classifying a digital document, the method comprising:
identifying, by an automated data processor, a request for access to the digital document for a first user;
determining, by the automated data processor, user identifying information for the first user;
obtaining, by the automated data processor, according to the user identifying information a first user characteristic comprising at least one of an organizational affiliation of the first user and a job function of the first user;
generating, by the automated data processor, based on the first user characteristic, a digital document classification for the digital document;
associating, by the automated data processor, the digital document classification with the digital document, by at least one of: (1) embedding the document classification in the digital document, and (2) logging the document classification in a log identifying the digital document; and
making a user access determination for the digital documentaccording to the associated digital document classification.

2. The method of claim 1, wherein the method further comprises:
obtaining, by the automated data processor, application identifying information for a programming application associated with generation of the digital document; and
obtaining, by the automated data processor, according to the application identifying information, function identifying information for the programming application,
wherein the generating of the classification is performed according to the function identifying information.

3. The method of claim 1, wherein the obtaining of the function identifying information further comprises determining a software grouping of the programming application.

4. The method of claim 1, wherein the method further comprises:
obtaining, by the automated data processor, as a document attribute, an identification of an organizational unit associated with creation of the digital document,
wherein the generating of the classification is performed according to the document attribute.

5. The method of claim 1, wherein the user characteristic comprises an organizational affiliation of the first user.

6. The method of claim 1, wherein the user characteristic comprises a job function of the first user.

7. The method of claim 1, wherein the user characteristic comprises an authorization assigned to the first user.

8. The method of claim 1, further comprising setting a rights management policy for the digital document according to the document classification.

9. The method of claim 1, further comprising managing document access control for the digital document according to the document classification.

10. The method of claim 1, further comprising controlling a right to share the digital document with additional users according to the document classification.

11. The method of claim 1, further comprising managing data loss prevention for the digital document according to the document classification.

12. The method of claim 1, wherein the digital document is generated using SAP software.

13. The method of claim 1, wherein the first user is a user who created the digital document.

14. The method of claim 1, wherein the first user is a user who first edited the digital document at an organization affiliated with a user attempting to access the digital document.

15. The method of claim 1, wherein the first user is a user attempting to access the digital document.

16. The method of claim 1, further comprising based on the classification, taking the step of one of granting and denying access, to the digital document for a user attempting to access the digital document.

17. The method of claim 1, wherein the method further comprises:
obtaining, by the automated data processor, according to the user identifying information a second user characteristic for the first user,
wherein the generating of the digital document classification is based on the first user characteristic and on the second user characteristic.

18. The method of claim 1, wherein the method further comprises:
assigning, by the automated data processor, a reliability score to at least one of the first user characteristic and the second user characteristic; and
weighting, by the automated data processor, according to the reliability score, the at least one of the first user characteristic and the second user characteristic,
wherein the generating of the digital document classification is based on the weighted at least one of the first user characteristic and the second user characteristic.

19. The method of claim 1, wherein a default reliability score is for the first user characteristic is weighted less than a second reliability score that is generated according to specific information obtained for the first user.

20. The method of claim 1, wherein the method further comprises:
determining that a conflict exists between the first user characteristic and the second user characteristic for the first user; and
selecting a selected score of the first user characteristic and the second user characteristic, the selected score being the score that indicates a higher level in an organizational hierarchy,
wherein the generating of the digital document classification is based on the selected score.

21. The method of claim 1, wherein the first user characteristic is obtained from a classification database data populated for the classification.

22. The method of claim 1, wherein the method further comprises:
obtaining, by the automated data processor, from the first user a user data input indicating sensitivity of the digital document,
wherein the generating of the classification is performed according to the user data input.

23. An automated data processing system for classifying a digital document, the automated data processing system comprising:
a data determiner configured to obtain user identifying information for a first user attempting to access the digital document, and to obtain, according to the user identifying information, a first user characteristic;
a classification generator configured to generate, using the automated data processor, based on the first user characteristic, a digital document classification for the digital document; and
a document manager configured to associate the digital document classification with the digital document, by at least one of: (1) embedding the digital document classification in the digital document, (2) logging the digital document classification in a log identifying the digital document,
wherein a degree of access to the digital document for a user attempting access is determined according to the digital document classification.

24. A method of classifying a digital document, the method comprising:
identifying, by an automated data processor, a request for access, by a first process, to the digital document;
obtaining, by the automated data processor, application identifying information for a programming application associated with generation of the digital document;
generating, by the automated data processor, based on the application identifying information, a digital document classification for the digital document;
associating, by the automated data processor, the digital document classification with the digital document, by at least one of: (1) embedding the document classification in the digital document, and (2) logging the document classification in a log identifying the digital document; and
based on the document classification, denying access to the digital document for a user attempting access to the digital document.

25. The method of claim 24, wherein the first user is a user who created the document and the user attempting access is a user different from the first user.

26. The method of claim 24, wherein the user attempting access is the first user.
